# EUROPEAN PATENT APPLICATION

(11) **EP 4 796 276 A1**
(43) Date of publication of application: **26.08.2026**
(21) Application number: 26151380.8
(22) Date of filing: 12.01.2026
(51) Int. Cl.: B29B 17/00, B29B 17/04, B29K 86/00

(54) **METHOD FOR RECYCLING POLYISO INSULATION USING POLYMER BINDER**

(30) Priority: 13.01.2025 US 202563744703 P; 30.12.2025 US 202519436422
(71) Applicant: Carlisle Construction Materials, LLC, Carlisle, PA 17013 (US)
(72) Inventor: ZHANG, Xuan, Carlisle, 17013 (US); ROSMUS, Travis, Carlisle, 17013 (US); NORIEGA OSORES, Nicolas, Carlisle, 17013 (US); JOHNSON, Rachel, Carlisle, 17013 (US); MOUNTAIN, Gregory, Newville, 17241 (US)
(74) Representative: Mewburn Ellis LLP

(57) **Abstract**

A method of making a coverboard or wall sheathing, by mixing polyiso waste particles with polymer binder particles, wherein the ratio by weight of polyiso waste to polymer binder is between 1:15 to 1:1, wherein the polyiso waste particles are between 0.01-10 mm in diameter, and wherein the polymer binder particle are between 0.02-5 mm in diameter.

## Description

### Related Application:

The present application claims priority to U.S. Provisional Patent Application Serial No. 63/744,703, of same title, filed January 13, 2025, the entire disclosure of which is incorporated herein by reference in its entirety for all purposes.

### Technical Field:

The present system relates to recycling polyiso insulation scrap materials for use in building cover boards.

### Background of the Invention:

The process of making polyiso insulation often results in a significant amount of polyiso waste. The source of this waste can come from multiple factors. First, polyiso boards are usually made on a continuous production line. These boards are trimmed on the edges and cut down to regular sizes of 4'x8' or 4'x4' by sawing. This saw trimming and cutting creates significant amounts of fine polyiso dust waste. Second, the starting and stopping of the polyiso production line creates a significant amount of "out of quality" polyiso board which is typically just sent to a landfill. Third, "out of quality" polyiso waste is also generated during grade changeovers on the production line. Unfortunately, all of this polyiso waste is typically just sent to a landfill. It would instead be desirable to recycle and somehow re-use this polyiso waste material.

Unfortunately, a big recycling challenge is that the components of this polyiso waste are typically both a mixture of facer materials, wood, and polyiso foam of various densities (both of which occur in a variety of different particle sizes). There are many existing systems for recycling polyisocyanurate chemically to decompose the material into polyol. For example, U.S. Patent 4,110,266 describes a process of decomposing polyurethane and polyisocyanurate via reaction with ammonia, or with an amine or a polyol. This allows for reuse of waste foam to make new foam materials. However, this depolymerization process does not work in the presence of significant amounts of facer material. Unfortunately, the separation of facer and polyisocyanurate materials present significant challenges. When facer materials are present, they can include paper, coated glass, foil, plastic, wood and other materials. These materials can be are very light and can be a mixture of different particle sizes. Sometimes, these waste materials are in board form and have different sizes and shapes. All of this makes the recycling of polyiso waste difficult.

It would instead be desirable to recycle all this material, as this would cut down on landfill waste. In addition, it would be desirable to use/recycle these materials into other useful building materials. This would have the advantage of keeping the recycled material for use within the same building construction industry. Ideally, the building materials company that initially generates the polyiso waste would be same company that could actually use this waste to produce new building materials from this recycled waste.

### Summary of the Invention:

The present invention provides a system for recycling polyiso waste to create new building materials. Most preferably, these new building materials are roofing cover boards and wall sheathing.

In one preferred aspect, the present system provides a method of making a building product, comprising:
(1) Mixing polyiso waste with polymer binder, such as polyethylene (PE) or polyvinyl chloride, polystyrene, polycarbonate, polyamide, polyethylene terephthalate or suitable thermoplastic polyester. In addition, polymer fibers, such as low melt polyethylene terephthalate (PET) can be added. Furthermore, additives, such as heat stabilizers, free flow agents, lubricants, flame retardants and other functional ingredients, can be added. In various preferred aspects, this mixing can be done in a tumble mixer, a ribbon mixer, a paddle mixer, or other suitable mixing or blending equipment.
(2) Placing the resulting mixture into a mold or onto a belt press;
(3) Applying heat to the mixture;
(4) Applying pressure to the mixture; and then
(5) Removing from the mold or press equipment and allowing the mixture to cool.

In preferred aspects, the ratio by weight of polyiso waste to polymer binder is between 1:15 to 1:1. This corresponds to polyiso accounting for 7% to 50% by weight of the total formulation. The more preferred range is 1:10 to 1:1.5. This corresponds to polyiso accounting for 9% to 40% by weight of the total formulation. The most preferred range is 1:6 to 1:2. This corresponds to polyiso accounting for 14% to 35% by weight of the total formulation. As can be appreciated, the present range in claimed mixing ratios/percentages show the wide effectiveness of the present solution. Specifically, when a small amount of polyiso waste is used in the mixture, the properties of the building product (e.g.: the cover board) more closely resemble the properties of normal polymer cover board, i.e. the board will have strong compressive strength, high impact resistant and a density close to that of a polymer board. Conversely, when a large amount of polyiso waste is incorporated into the mixture, the resulting building material (cover board) will be highly sustainable (hence good for environment) yet have low density (hence easy to handle and install).

The polyiso waste particles can be of wide range of particle size. In preferred embodiments, the polyiso waste particles can be of 0.01-10 mm in diameter. In more preferred embodiments, the polyiso waste particles can be of 0.1-8 mm in diameter. In most preferred embodiments, the polyiso waste particles can be of 0.2-5 mm in diameter. Due to the edge trimming by saw, facer waste from the polyiso production process often present as a long strips. Such long facer strips can optionally be 0.1-10 mm in length and still be incorporated into the present method.

In accordance with the present invention, the polymer binder particle size is comparable to, or smaller than, the polyiso waste particle size. In accordance with the present invention, the appropriate particle size of the polymer binder can be obtained through pulverization, grinding, jet milling or cryogrinding process. In preferred embodiments, HDPE, LLDPE, LDPE and PP grades from various suppliers can be used as the polymer binder. Preferably, appropriately sized polymer binders can be obtained directly from the polymer manufacturing process. In preferred embodiments, the polymer binder particle size can be of 0.02-5 mm in diameter. In more preferred embodiments, the polymer binder particle size can be of 0.08-3 mm in diameter. In most preferred embodiments, the polymer binder particles can be of 0.15-2 mm in diameter. The polymer binder can any type of thermoplastic polymer, all keeping within the scope of the present invention. In preferred aspects, the polymer binder can be polyethylene, polypropylene or copolymer of ethylene with other alpha-olefines, polyethylene vinyl acetate, polystyrene and poly(vinyl chloride). For example, various grades of Microthene from LyondellBasell, Eltex HDPE powders or Eltex P PP powders from Ineos as well as common PVC grades from various suppliers can also be used as polymer binder in the present application. Recycled polymers from discarded plastic products can be used as the polymer binder. Using recycled polymers will further contribute to the circular economy and decrease the amount of waste that ends up in landfills or in the natural environment. When recycled polymers are used, they can be in form of flakes, pellets, shreds, or particles of various sizes. They may be used exclusively or used in combination with virgin polymers.

Together, the three above preferred ranges, i.e.: (1) the preferred range of polyiso waste to polymer binder; (2) the preferred size range of the polyiso particles; and (3) the preferred size range of the polymer binder particles, can be used to produce a building material in accordance with the present invention having unexpected and surprising properties. Specifically, combining the polyiso waste together with the polymer binder in these ranges results in a material that can be used as a roofing cover board or wall sheathing having acceptable performance properties.

In preferred embodiments, additives such as heat stabilizers, free flow agents, lubricants, flame retardants and other functional ingredients can also be added in the mixture to enhance the process or product performance.

In preferred embodiments, top and bottom facers can be added to the mixture during the molding process or laminated to the mixture after it has been removed from the mold. These top and bottom facers may be made of polyethylene (PE), paper, glass matt, coated class facer, foil or other suitable facer materials, all keeping within the scope of the presently claimed invention. A further advantage of the present system is that typical polyiso waste includes both scrap polyiso material and scrap facer material. The present system could include both in the final cover board / wall sheathing product.

### Brief Description of the Drawings:

Fig. 1 is an example of small particles of polyiso dust from saw dust.
Fig. 2 is an example of larger particles are often obtained from comminuting waste polyiso board.
Fig. 3 is a top photo of Sample 5 from Table 2, as produced by the present inventors.
Fig. 4 is a side photo of Sample 5 from Table 2, as produced by the present inventors.
Fig. 5 is a top photo of Sample 10 from Table 2, as produced by the present inventors.
Fig. 6 is a side photo of Sample 10 from Table 2, as produced by the present inventors.
Fig. 7 is microscope of cross section of Sample 6 from Table 2.
Fig 8. is microscope of cross section of Sample 10 from Table 2.
Fig 9. is microscope of cross section of Sample 13 from Table 3.
Fig. 10 is a sectional illustration of the present building material showing both polyiso foam waste and facer waste in a PE matrix.
Fig. 11 is similar to Fig. 10, but adds top and bottom facers.

### Detailed Description of the Drawings:

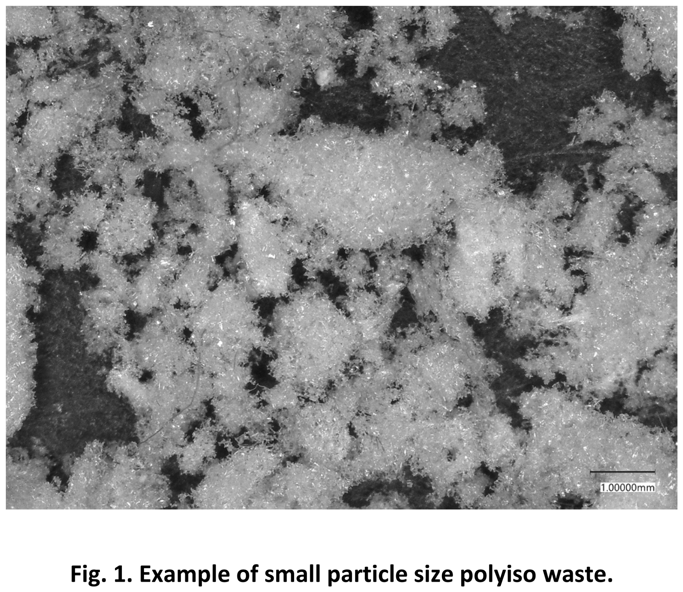

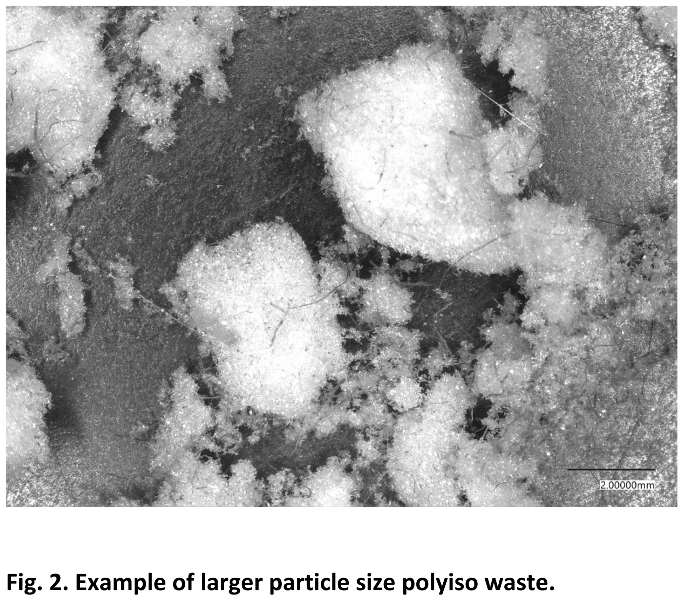

Fig. 1 is an example of small particles of polyiso dust from saw dust, and Fig. 2 is an example of larger particles are often obtained from comminuting waste polyiso board.

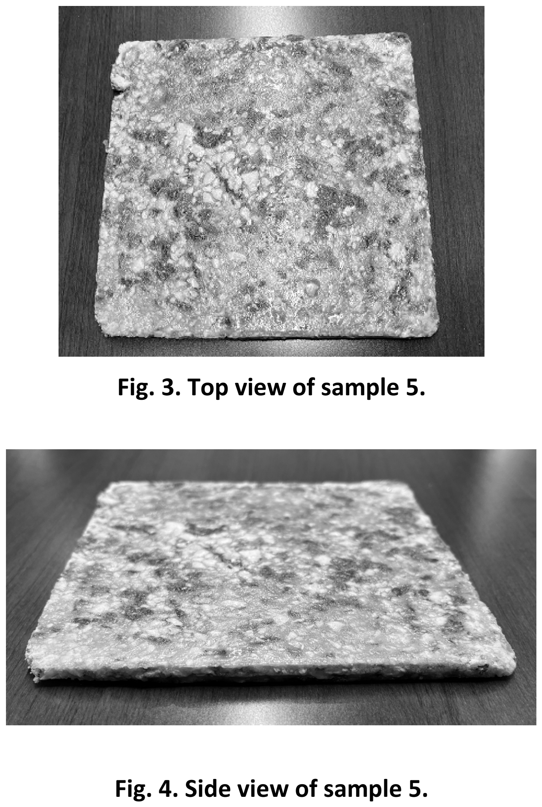

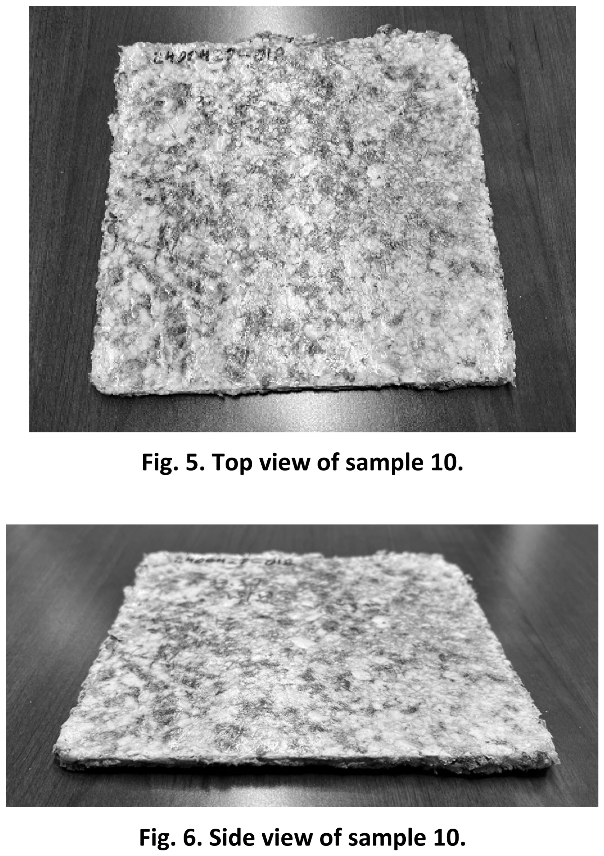

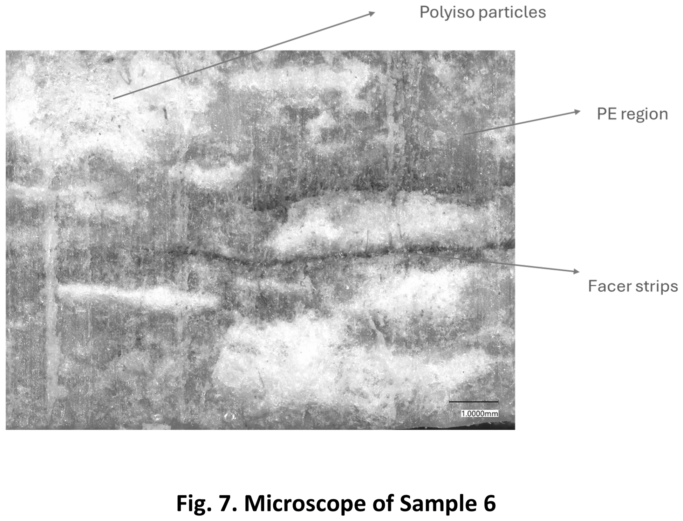

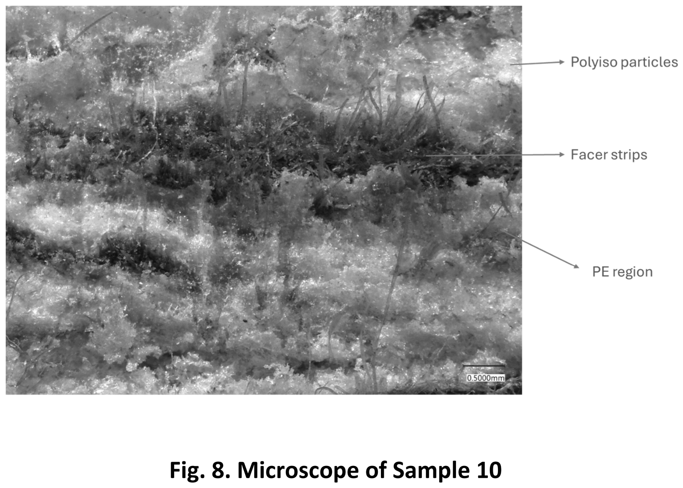

Figs. 3 to 9 illustrate successful test samples produced by the present inventors using the present method.

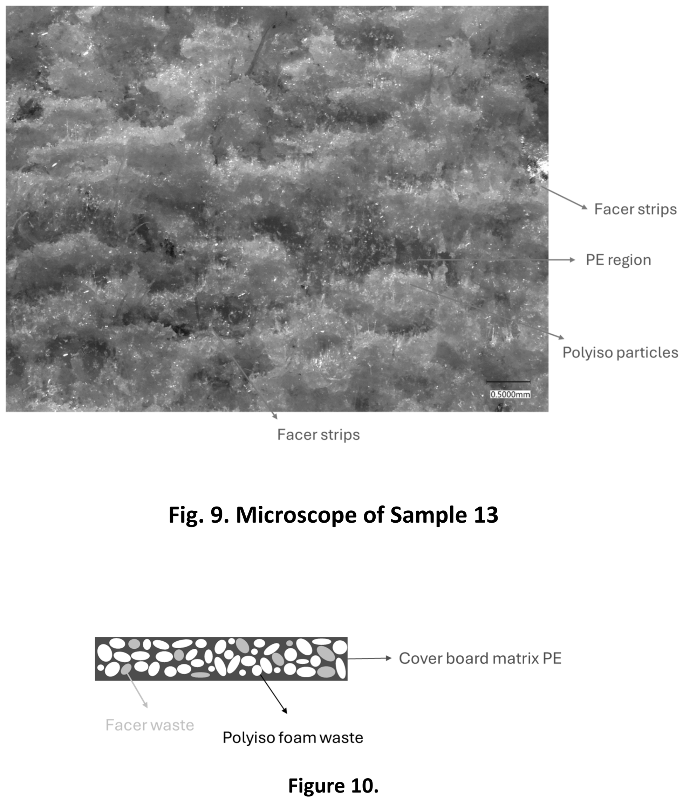

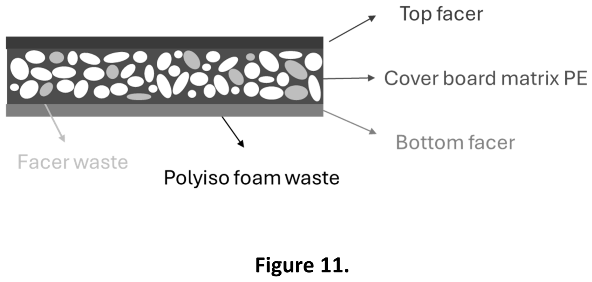

Figs. 10 and 11 illustrate the final product mixture in which both polyiso foam waste and facer waste are distributed in a PE matrix.

The present building composite can be used to make a roofing cover board or a wall sheathing. In preferred aspects, this material is produced according to the following steps:
(1) Mixing polyiso waste with polymer binder, such as polyethylene (PE). In addition, polymer fibers, such as low melt polyethylene terephthalate (PET) can be added. Additives, such as heat stabilizers, free flow agents, lubricants, flame retardants and other functional ingredients, can also be added.
(2) Placing the resulting mixture into a mold or onto a belt press;
(3) Applying heat and pressure to the mixture, and then
(4) Removing from the mold or press equipment and allowing the mixture to cool.

In preferred embodiments, the ratio by weight of polyiso waste to PE polymer binder is between 1:15 to 1:1. This corresponds to polyiso accounting for 7% to 50% by weight of the total formulation. The more preferred range is 1: 10 to 1: 1.5. This corresponds to polyiso accounting for 9% to 40% by weight of the total formulation. The most preferred range is 1:6 to 1:2. This corresponds to polyiso accounting for 14% to 35% by weight of the total formulation. Optionally, polymer fibers can be used to replace part of the polymer as the binder.

Besides being sustainable, the present cover boards made from polyiso waste are light weight compared to conventional cover boards which are typically made with gypsum. In addition, these cover boards are much less moisture sensitive and more rain resistant than traditional gypsum cover board.

### Experimental Data:

**Table 1. Examples of formulations with lower weight ratio of polyiso waste to PE. In this example, polyiso waste particle size range is 0.1-5 mm.**

| **Sample Name** | **Sample 1** | **Sample 2** | **Sample 3** | **Sample 4** |
|---|---|---|---|---|
| Iso weight (g) | 5.7 | 7.3 | 8.5 | 9.3 |
| PE weight (g) | 85.0 | 83.4 | 82.2 | 81.4 |
| Iso to PE ratio (w/w) | 1:15 | 1:11.5 | 1:9.7 | 1:8.8 |
| Measured thickness (in) | 0.24 | 0.24 | 0.25 | 0.26 |
| Board density (lb/ft3) | 41.2 | 41.4 | 39.3 | 37.8 |

**Table 2. Examples of formulations with higher weight ratio of polyiso waste to PE. In this example, polyiso waste particle size range is 0.1-5 mm.**

| **Sample Name** | **Sample 5** | **Sample 6** | **Sample 7** | **Sample 8** | **Sample 9** | **Sample 10** |
|---|---|---|---|---|---|---|
| Iso weight (g) | 9.5 | 12.3 | 14.5 | 15.9 | 16.5 | 18.1 |
| PE weight (g) | 85.7 | 73.9 | 58.1 | 47.6 | 42.5 | 36.3 |
| Iso to PE ratio (w/w) | 1:9 | 1:6 | 1:4 | 1:3 | 1:2.6 | 1:2 |
| Measured thickness (in) | 0.26 | 0.24 | 0.24 | 0.24 | 0.23 | 0.21 |
| Board density (lb/ft3) | 39.9 | 38.8 | 32.9 | 29.3 | 27.8 | 27.8 |

**Table 3. Examples of formulations with small particle size polyiso waste with PE. In this example, polyiso waste particle size range is 0.2-3 mm.**

| **Sample name** | **Sample 11** | **Sample 12** | **Sample 13** | **Sample 14** | **Sample 15** |
|---|---|---|---|---|---|
| Iso weight (g) | 13.61 | 15.42 | 15.88 | 16.51 | 18.90 |
| PE weight (g) | 81.65 | 61.69 | 47.63 | 42.46 | 37.80 |
| Iso to PE ratio (w/w) | 1:6 | 1:4 | 1:3 | 1:2.6 | 1:2 |
| Measured thickness (in) | 0.27 | 0.29 | 0.27 | 0.25 | 0.25 |
| Board density (lb/ft3) | 37.9 | 28.4 | 25.9 | 26.7 | 25.3 |

In optional aspects other thermoplastic binders can be used besides polyethylene. For example, ethylene copolymer with other alpha olefins, polypropylene, PVC, polyacrylates, polystyrene, EVA, etc. can also be used. In preferred aspects, these polymers are recycled materials as well. In addition, a thermoset polymer can also be used as binder, such as urea formaldehyde, phenol formaldehyde, polyurethane, etc.

Fig. 10 is a sectional illustration of the present building material showing both polyiso foam waste and facer waste in a PE matrix. Finally, as seen in Fig. 11, top and bottom facers may be added to the mixture after the mixture has been removed from a mold. For cover boards with facers, the top and bottom facer can be made of the same material or of different materials. When thermoplastic sheets are used as the facer, they can optionally be melted to become indistinguishable from the matrix of the coverboard. For example, PE film can be used as the facer while PE is used as the binder. In the above examples described herein, the samples can be prepared with or without PE film as the facer. When PE film is used as the facer, the film thickness can optionally be 2 - 100 mils. Alternatively, paper, coated glass facer, foil, or composite facers can be used instead. These materials form good bonds with the polymer matrix and form composite with the matrix. When the top and bottom facers are made of different materials, a coated glass facer can be used as the top facer while paper facer can be used as the bottom facer.
The following numbered paragraphs set out broad combinations of the inventive concepts herein disclosed:
1. A method of making a building product, comprising:
   mixing polyiso waste particles with polymer binder particles,
      wherein the ratio by weight of polyiso waste to polymer binder is between 1:15 to 1:1, and
      wherein the polyiso waste particles are between 0.01-10 mm in diameter, and
      wherein the polymer binder particle are between 0.02-5 mm in diameter;
   placing the resulting mixture into a mold or onto a belt press;
   applying heat to the mixture;
   applying pressure to the mixture; and then
   removing the mixture from the mold or press equipment and then allowing it to cool.
2. The method of paragraph 1, wherein the polymer is the polymer is polyvinyl chloride, polystyrene, polycarbonate, polyamide, polyethylene terephthalate or a thermoplastic polyester.
3. The method of paragraph 1, wherein the polymer is polyethylene (PE), a copolymer of ethylene with alpha-olefin; polypropylene (PP) or a copolymer of polypropylene.
4. The method of paragraph 1, further comprising:
   adding polymer fibers to the mixture including polyvinyl chloride, polystyrene, polycarbonate, polyamide, polyethylene terephthalate or a thermoplastic polyester.
5. The method of paragraph 4, wherein the polymer fiber is low melt polyethylene terephthalate (PET), polypropylene, PVC, polyacrylates, polystyrene, or EVA.
6. The method of paragraph 1, further comprising adding one of a heat stabilizer, a free flow agent, a lubricant, or a flame retardant, or combinations thereof.
7. The method of paragraph 1, wherein the ratio by weight of polyiso waste to polymer binder is between 1:10 to 1:1.5.
8. The method of paragraph 1, wherein the ratio by weight of polyiso waste to polymer binder is between 1:6 to 1:2.
9. The method of paragraph 1, wherein the polymer binder particle size is between 0.08-3 mm in diameter.
10. The method of paragraph 1, wherein the polymer binder particle size is between 0.15-2 mm in diameter.
11. The method of paragraph 1, wherein the polyiso waste particles are 0.1-8 mm in diameter.
12. The method of paragraph 1, wherein the polyiso waste particles are 0.2-5 mm in diameter.
13. The method of paragraph 1, further comprising:
   adding top and bottom facers to the mixture during the pressing process or after the mixture has been removed from the mold.
14. The method of paragraph 1, wherein the polyiso waste includes both scrap polyiso material and scrap facer material.
15. A coverboard or wall sheathing, comprising:
   polyiso waste particles; and
   polymer binder particles,

   wherein the ratio by weight of polyiso waste to polymer binder is between 1:15 to 1:1, and
   wherein the polyiso waste particles are between 0.01-10 mm in diameter, and
   wherein the polymer binder particle are between 0.02-5 mm in diameter.
16. The coverboard or wall sheathing of paragraph 15, wherein the polymer binder is a thermoplastic selected from the group consisting of polyethylene (PE), a copolymer of ethylene with alpha-olefin; polypropylene (PP) and a copolymer of polypropylene.
17. The coverboard or wall sheathing of paragraph 15, further comprising:
   polymer fibers selected from the group consisting of low melt polyethylene terephthalate (PET), polypropylene, PVC, polyacrylates, polystyrene and EVA.
18. The coverboard or wall sheathing of paragraph 15, wherein the polymer binder is a thermoset polymer comprising urea formaldehyde, phenol formaldehyde, or polyurethane.
19. The coverboard or wall sheathing of paragraph 15, wherein the polymer binder particle size is between 0.08-3 mm in diameter, and the polyiso waste particles are 0.1-8 mm in diameter.
20. The coverboard or wall sheathing of paragraph 15, wherein the polymer binder particle size is between 0.15-2 mm in diameter, and the polyiso waste particles are 0.2-5 mm in diameter.

## Claims

1. A method of making a building product, comprising:
mixing polyiso waste particles with polymer binder particles,
wherein the ratio by weight of polyiso waste to polymer binder is between 1:15 to 1:1, and
wherein the polyiso waste particles are between 0.01-10 mm in diameter, and
wherein the polymer binder particle are between 0.02-5 mm in diameter;
placing the resulting mixture into a mold or onto a belt press;
applying heat to the mixture;
applying pressure to the mixture; and then
removing the mixture from the mold or press equipment and then allowing it to cool.

2. The method of claim 1, wherein the polymer is:
polyvinyl chloride, polystyrene, polycarbonate, polyamide, polyethylene terephthalate or a thermoplastic polyester;
or
polyethylene (PE), a copolymer of ethylene with alpha-olefin; polypropylene (PP) or a copolymer of polypropylene.

3. The method of claim 1, further comprising:
adding polymer fibers to the mixture including polyvinyl chloride, polystyrene, polycarbonate, polyamide, polyethylene terephthalate or a thermoplastic polyester.

4. The method of claim 3, wherein the polymer fiber is low melt polyethylene terephthalate (PET), polypropylene, PVC, polyacrylates, polystyrene, or EVA.

5. The method of any one of claims 1 to 4, further comprising adding one of a heat stabilizer, a free flow agent, a lubricant, or a flame retardant, or combinations thereof.

6. The method of any one of claims 1 to 5, wherein the ratio by weight of polyiso waste to polymer binder is between 1:10 to 1:1.5, and optionally wherein the ratio by weight of polyiso waste to polymer binder is between 1:6 to 1:2.

7. The method of any one of claims 1 to 6, wherein the polymer binder particle size is between 0.08-3 mm in diameter, and optionally wherein the polymer binder particle size is between 0.15-2 mm in diameter.

8. The method of any one of claims 1 to 7, wherein the polyiso waste particles are 0.1-8 mm in diameter, and optionally wherein the polyiso waste particles are 0.2-5 mm in diameter.

9. The method of any one of claims 1 to 8, further comprising:
adding top and bottom facers to the mixture during the pressing process or after the mixture has been removed from the mold.

10. The method of any one of claims 1 to 9, wherein the polyiso waste includes both scrap polyiso material and scrap facer material.

11. A coverboard or wall sheathing, comprising:
polyiso waste particles; and
polymer binder particles,
wherein the ratio by weight of polyiso waste to polymer binder is between 1:15 to 1:1, and
wherein the polyiso waste particles are between 0.01-10 mm in diameter, and
wherein the polymer binder particle are between 0.02-5 mm in diameter.

12. The coverboard or wall sheathing of claim 11, wherein the polymer binder is a thermoplastic selected from the group consisting of polyethylene (PE), a copolymer of ethylene with alpha-olefin; polypropylene (PP) and a copolymer of polypropylene.

13. The coverboard or wall sheathing of claim 11, further comprising:
polymer fibers selected from the group consisting of low melt polyethylene terephthalate (PET), polypropylene, PVC, polyacrylates, polystyrene and EVA.

14. The coverboard or wall sheathing of claim 13, wherein the polymer binder is a thermoset polymer comprising urea formaldehyde, phenol formaldehyde, or polyurethane.

15. The coverboard or wall sheathing of any one of claims 11 to 13, wherein the polymer binder particle size is between 0.08-3 mm in diameter, and the polyiso waste particles are 0.1-8 mm in diameter,
or
wherein the polymer binder particle size is between 0.15-2 mm in diameter, and the polyiso waste particles are 0.2-5 mm in diameter.
